# EUROPÄISCHE PATENTANMELDUNG

(11) **EP 3 578 582 A1**
(43) Veröffentlichungstag der Anmeldung: **11.12.2019**
(21) Anmeldenummer: 18175892.1
(22) Anmeldetag: 05.06.2018
(51) Int. Cl.: C08G 18/76, C08G 18/16, C08G 18/18, C08G 18/48

(54) **POLYURETHANHARTSCHÄUME MIT VERBESSERTER DURCHHÄRTUNG**

(71) Anmelder: Covestro Deutschland AG, 51373 Leverkusen (DE)
(72) Erfinder: Albers, Reinhard, 51375 Leverkusen (DE); Klasen, Patrick, 52391 Vettweiss (DE); Palm, Natalie, 40235 Düsseldorf (DE)
(74) Vertreter: Levpat

(57) **Zusammenfassung**

Die vorliegende Erfindung betrifft Polyurethan(PUR)-Hartschäume mit verbesserter Durchhärtung.

## Beschreibung

Die vorliegende Erfindung betrifft Polyurethan(PUR)-Hartschäume mit verbesserter Durchhärtung.

In der Fernwärmeindustrie werden Polyurethansysteme zur Isolierung von Rohren eingesetzt. Diese Industrie leistet einen entscheidenden Beitrag im Bereich Nachhaltigkeit und Energieeinsparung und wird daher auf lange Sicht seinen wichtigen Stellenwert als Anwendung für PUR-Hartschaumstoffe behalten. Gedämmte Rohrleitungssysteme werden aus einzelnen Rohrsegmenten zusammengefügt. Die Rohrsegmente werden mit Muffen verbunden.

In der Rohrindustrie unterscheidet man zwischen kontinuierlichen und diskontinuierlichen Herstellverfahren zur Produktion von isolierten Rohren. Ein wesentlicher Unterschied ist hier unter Anderem, dass bei dem diskontinuierlichen Verfahren das auszuschäumende Rohr mit den an den Enden befindlichen Endkappen ein einzelnes Halbzeug darstellt. Die Verweildauer der Endkappen bestimmt im großen Maß die Produktivität dieser Art von Fertigung. Mit Polyurethanschaumstoffen gedämmte Rohre sind im Stand der Technik bekannt.
Die standardmäßig 12-16m langen Rohre bestehen aus einem Außenrohr (z.B. PE), sowie einem durch Abstandshalter mittig platziertem Innenrohr (z.B. Stahl). Die Rohrenden sind durch Endkappen abgedichtet. Herkömmlicherweise wird das so präparierte Rohr zum Ausschäumen leicht in Neigung gebracht, wobei ein mittiges Befüllen eines waagerechten Rohres ebenfalls möglich ist. Das Polyurethanreaktivgemisch wird zwischen Innen- und Außenrohr durch ein Einfüllloch in der oberen Endkappe eingefüllt. Nach entsprechender Verweildauer und Durchhärtung des Polyurethanschaums werden die Endkappen entfernt, und das nun isolierte Rohr den weiteren Produktionsschritten zur Verfügung gestellt.

Eine übliche Methode, eine schnellere Durchhärtung zu erreichen, besteht in der Substitution der herkömmlichen Katalysatoren durch speziell dafür entwickelte Katalysatoren. Diese wirken sich jedoch bekanntermaßen negativ auf das Fließverhalten aus. Um nun erfolgreich schnell durchhärtende PUR-/PIR-Hartschaumstoffe mit den gewohnten Eigenschaften diskontinuierlich verarbeiten zu können, fehlen aktuell technische Lösungen.

In EP 1 552 915 A2 wird ein Verfahren zur Herstellung von gedämmten Rohren offenbart, wobei ein Polyurethan(PUR)system enthaltend eine Isocyanatkomponente und eine Polyolkomponente mit einer niedrigen Viskositat von kleiner 3000 mPas in ein entsprechendes Rohr mit einem Innenrohr und einem Mantelrohr eingefüllt wird. Nach dem Einfüllen schäumt das Polyurethansystem auf und härtet gleichzeitig aus. Als Katalysatoren für die Polyurethanbildung werden Amine wie Triethylamin und/oder 1,4-Diaza-bicyclo-(2,2,2)-octan eingesetzt. EP 1 783 152 A2 offenbart ebenfalls ein Verfahren zur Herstellung von gedämmten Rohren, wobei ein Polyisocyanurat(PIR)system enthaltend eine lsocyanatkomponente und eine Polyolkomponente mit besonders niedriger Viskositat von weniger als 1300 mPas in ein Rohr enthaltend ein Innenrohr und ein Mantelrohr eingefüllt wird. Auch dieses Dokument nennt als geeignete Katalysatoren Amine wie Triethylamin oder 1,4-Diaza-bicyclo-(2,2,2)-octan. Nachteilig bei diesen Verfahren ist, dass die hergestellten PUR- bzw. PIR-Schäume eine schlechte Durchhärtung aufweisen.

Im vorgenannten Stand der Technik werden Verfahren beschrieben, um gedämmte Rohre herzustellen, in denen das Problem einer vollständigen Befüllung des Rohres vor dem Aufschäumen und dem Aushärten dadurch gelöst wird, dass Polyolkomponenten mit besonders geringer Viskosität und damit einer guten Fließfähigkeit eingesetzt werden.

Das Reaktionsprofil des Polyurethanreaktionsgemisches sollte so eingestellt sein, dass eine gute Vorverteilung des Reaktionsgemisches erreicht wird, bevor das Gemisch reagiert und aushärtet. Weiterhin sollte genügend Zeit zur Verfügung stehen, um das Polyurethanreaktionsgemisch innerhalb der Startzeit einfüllen zu können. Für beides benötigt man eine lange Startzeit.

Aufgabe der Erfindung war es einen Polyurethan-Hartschaum für die Herstellung von gedämmten Rohren und Paneelen bereit zu stellen, welches sich durch eine schnelle Herstellung, sowie eine schnelle Durchhärtung auszeichnet und dabei keine Rissbildung und nur geringen Nachtrieb aufweist.

Überraschenderweise wurde gefunden, dass durch die Kombination von speziellen Katalysatoren das Durchhärtevermögen und der Nachtrieb verbessert werden, ohne die gewohnten Eigenschaften der Schäume negativ zu beeinflussen.

Die Aufgabe konnte durch die erfindungsgemäßen, im Folgenden näher beschriebenen Polyurethanreaktivgemische gelöst werden.

Gegenstand der Erfindung sind Polyurethanhartschaumstoffe zur Herstellung von gedämmten Rohren und Paneelen erhältlich aus Polyurethanreaktivgemischen bestehend aus
A) einer organischen aromatischen Polyisocyanatkomponente und
B) einer Polyolformulierung bestehend aus
   B1) einem oder mehreren Polyolen mit einer zahlenmittleren Hydroxylzahl von 50 bis 800 mg KOH/g gemäß DIN 53240-2, Oktober 1998, bevorzugt 100 bis 600 mg KOH/g aus der Gruppe bestehend aus Polyetherpolyolen, Polyesterpolyolen und Polyetheresterpolyolen,
   B2) gegebenenfalls Kettenverlängerern und/oder Vernetzern,
   B3) einem Katalysatorgemisch bestehend aus Natrium-N-(2-hydroxy-5-nonylphenyl)methyl-N-methylglycinat und mindestens einem weiteren tertiären Aminkatalysator,
   B4) Treibmitteln,
   B5) Schaumstabilisatoren,
   B6) gegebenenfalls Hilfs- und Zusatzmitteln,
wobei das Verhältnis der Anzahl der NCO-Gruppen zu der Anzahl der OH-Gruppen 1:1 bis 1,6:1, bevorzugt 1:1 bis 1,4:1 beträgt.

Als Isocyanatkomponente werden Verbindungen eingesetzt, die zwei oder mehr lsocyanatgruppen aufweisen. Als organische Polyisocyanate kommen insbesondere aromatische Di- oder Polyisocyanate in Betracht. Im Einzelnen seien beispielhaft genannt: aromatische Diisocyanate, wie 1,5-Naphtylen-diisocyanat (1,5-NDI), 2,4- und 2,6-Toluylen-diisocyanat (TDI) sowie deren Gemische, 2,4'-, 2,2'-, und vorzugsweise 4,4'-Diphenylmethan-diisocyanat (monomeres MDI (mMDI)) sowie Mischungen aus mindestens zwei dieser Isomere, Polyphenyl-polymethylenpolyisocyanate (polymeres MDI (pMDI)) mit zwei oder mehr aromatischen Einheiten, Mischungen aus 2,4'-, 2,2'- und 4,4'-Diphenylmethandiisocyanaten und Polyphenyl-polymethylenpolyisocyanaten (Roh-MDI), Mischungen aus Roh- MDI und Toluylen-diisocyanaten, Polyphenyl-Polyisocyanate, Carbodiimid modifizierte flüssige 4,4'- und/oder 2,4-Diphenylmethandiisocyanate und 4,4'-Diisocyanato-diphenylethan-(1,2) können ebenfalls verwendet werden. Verwendung finden besonders bevorzugt Isocyanate, die bei einer Temperatur von 25 °C bis 40°C in flüssiger Form vorliegen. Die Isocyanate können auch modifiziert sein, beispielsweise durch Einbau von Uretdion-, Carbamat-, lsocyanurat-, Carbodiimid-, Allophanat- und insbesondere Urethangruppen. Die Isocyanatkomponente (A) kann auch in Form von Polyisocyanatprepolymeren eingesetzt werden. Diese Prepolymere sind aus dem Stand der Technik bekannt. Die Herstellung erfolgt auf an sich bekannte Weise, indem vorstehend beschriebene Polyisocyanate (A), beispielsweise bei erhöhten Temperaturen, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im Allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Die Polyolformulierung (B) besteht aus folgenden Komponenten:
B1) einem oder mehreren Polyolen mit einer zahlenmittleren Hydroxylzahl von 50 bis 800 mg KOH/g gemäß DIN 53240-2, Oktober 1998, bevorzugt 100 bis 600 mg KOH/g aus der Gruppe bestehend aus Polyetherpolyolen, Polyesterpolyolen und Polyetheresterpolyolen,
B2) gegebenenfalls Kettenverlängerer und/oder Vernetzer,
B3) einem Katalysatorgemisch bestehend aus Natrium-N-(2-hydroxy-5-nonylphenyl)methyl-N-methylglycinat und mindestens einem weiteren tertiären Aminkatalysator,
B4) Treibmitteln,
B5) Schaumstabilisatoren,
B6) gegebenenfalls Hilfs- und Zusatzmitteln.

Als Polyole (B1) kommen im Allgemeinen Verbindungen mit mindestens zwei gegenüber lsocyanat reaktiven Gruppen, das heißt mit mindestens zwei mit lsocyanatgruppen reaktiven Wasserstoffatomen, in Betracht. Beispiele hierfür sind Verbindungen mit OH-Gruppen.
Als Polyole (B1) kommen bevorzugt Verbindungen auf Basis von Polyetherpolyolen, Polyesterpolyolen, und/oder Polyetheresterpolyolen zum Einsatz. Die Funktionalitat der Polyole beträgt im Allgemeinen 1,9 bis 8, bevorzugt 2,4 bis 7, besonders bevorzugt 2,9 bis 6.
Die Polyole (B1) weisen eine Hydroxylzahl von im Allgemeinen größer als 100 mg KOH/g, bevorzugt größer als 150 mg KOH/g, besonders bevorzugt größer als 200 mg KOH/g auf. Als Obergrenze der Hydroxylzahl hat sich im Allgemeinen 1000 mg KOH/g, bevorzugt 800 mg KOH/g, besonders 700 mg KOH/g, ganz besonders 600 KOH/g bewährt. Die oben angegebenen OH-Zahlen beziehen sich auf die Gesamtheit der Polyole (B1), was nicht ausschließt, dass einzelne Bestandteile der Mischung höhere oder niedrigere Werte aufweisen.

Bevorzugt enthält Komponente (B1) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohole in Betracht, wie beispielsweise Glycerin, Trimethylolpropan (TMP), Pentaerythrit, Saccharose, Sorbit, Triethanolamin, Ethylendiamin, Diaminotoluol und ähnliche.

Bevorzugt werden als Startermolekül Glycerin, Saccharose und Sorbit verwendet.

Beispiele für Polyesterpolyole sind Polykondensate aus Di- sowie Tri- und Tetraolen und Di- sowie Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyesterpolyole verwendet werden. Beispiele für geeignete Diole sind Ethylenglykol, Butylenglykol, Diethylenglykol, Triethylenglykol, Polyalkylenglykole wie Polyethylenglykol, 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Bevorzugt werden Ethylenglykol und Diethylenglykol eingesetzt.
Als Polycarbonsäuren können beispielsweise Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure und Trimellitsäure eingesetzt werden. Bevorzugt werden Adipinsäure und Phthalsäureanhydrid eingesetzt.

In einer bevorzugten Ausführungsform enthält die Polyolformulierung (B) Vernetzer (B2). Unter Vernetzern werden Verbindungen verstanden, die ein Molekulargewicht von 60 bis 400 g/mol aufweisen und mindestens 3 gegenüber Isocyanaten reaktive Wasserstoffatome aufweisen. Ein Beispiel hierfür ist Glycerin. Die Vernetzer werden vorzugsweise in einer Menge von 1 bis 10 Gew.-%, bevorzugt von 2 bis 6 Gew.-%, bezogen auf das Gesamtgewicht der Polyolformulierung (B), eingesetzt.
Die Polyolformulierung kann gegebenenfalls auch Kettenverlängerungsmittel (B2) enthalten. Hierunter werden im Allgemeinen Verbindungen verstanden, die ein Molekulargewicht von 60 bis 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol. Die gegebenenfalls vorliegenden Kettenverlängerungsmittel werden im Allgemeinen in einer Menge von 0 bis 20 Gew.-%, bevorzugt von 2 bis 15 Gew.-%, bezogen auf das Gesamtgewicht der Polyolformulierung eingesetzt.

Die Vernetzer und Kettenverlängerungsmittel können - soweit vorhanden - in der Polyolformulierung einzeln oder in Kombination eingesetzt werden.

Das Polyurethansystem enthält des Weiteren ein Katalysatorgemisch (B3) bestehend aus Natrium-N-(2-hydroxy-5-nonylphenyl)methyl-N-methylglycinat und mindestens einem weiteren Aminkatalysator. Das Natrium-N-(2-hydroxy-5-nonylphenyl)methyl-N-methylglycinat wird vorzugsweise gelöst in Diethylenglykol eingesetzt.

Bevorzugte weitere Aminkatalysatoren sind N,N,N,N,N-Pentamethyldiethylentriamin (la), Bis-(dimethylaminoethyl)-ether (Ib), N,N-Dimethylaminoethyl-N-methylethanolamin (lc), N,N-Dimethylaminoethoxyethanol (Id), 1,3,5-Tris(3-(Dimethylamino)propyl)hexahydro-s-triazin, Triethylendiamin, N-Methylmorpholin, Pentamethyldiethylentriamin, Dimethylcyclohexylamin, Tetramethylethylendiamin, 1-Methyl-4-Dimethylaminoethylpiperazin, 3-Methoxy-N-Dimethylpropylamin, N-Ethylmorpholin, Diethylethanolamin, N-Cocomorpholin, N,N-Dimethyl-N',N' Dimethylisopropylpropylendiamin, N,N-Diethyl-3-Diethylaminopropylamin, Dimethylbenzylamin, Cyclohexyldimethylamin, Tris-(3-dimethylamino)-propylamin, 1,4-Diazabicyclooctan, 1-(bis(3-(Dimethylamino)propyl)amino)propan-2-ol und Mischungen davon.

(CH3)2N-CH2-CH2-N(CH3)CH2-CH2-N(CH3)2 (la)

(CH3)2N-CH2-CH2-O-CH2-CH2-N(CH3)2 (lb)

(CH3)2N-CH2-CH2-N(CH3)CH2-CH2-OH (lc)

(CH3)2N-CH2-CH2-O-CH2-CH2-OH (Id)

Bezogen auf die Polyolformulierung (B) wird die Katalysatormischung bevorzugt in einer Menge von 0,1 bis 2,5 Gew.-%, bevorzugt 0,1 bis 2,0 Gew.-%, besonders bevorzugt 0,1 bis 1,5 Gew.-% zugegeben.

Die Polyolformulierung enthält ferner als Bestandteil (B4) physikalische Treibmittel. Das physikalische Treibmittel wird im Allgemeinen in einer Menge von 0, 1 bis 30 Gew.-%, insbesondere von 2 bis 25 Gew.-%, bezogen auf das Gewicht der Polyolformulierung (B), eingesetzt.
Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, beispielsweise Cyclopentan, n-Pentan oder Isopentan, halogenierte Kohlenwasserstoffe, und andere Verbindungen, wie zum Beispiel perfluorierte Alkane, wie Perfluorhexan, Fluorchlorkohlenwasserstoffe, Ether, Ester, Ketone, Acetale und /oder halogenierte Olefine (sogenannte "HFO" oder "HFCO"; hydrofluoro olefins oder halogenated olefins).
Besonders bevorzugt wird mit Cyclopentan als physikalischem Treibmittel verschäumt.
Das Reaktivgemisch kann geringe Mengen an Wasser enthalten, welches zumeist über die eingesetzten Polyole eingeschleppt wird.

Als Schaumstabilisatoren (B5) werden vorzugsweise siliconhaltige Schaumstabilisatoren, wie Siloxan-Oxalkylen-Mischpolymerisate und andere Organopolysiloxane eingesetzt. Ferner sind Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertes Bisphenol A, Polyvinylalkohol sowie Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren einsetzbar. Die Schaumstabilisatoren werden bevorzugt in einer Menge von 0,2 bis 5 Gew.-%, bevorzugt von 0,5 bis 4,0 Gew.-%, jeweils bezogen auf das Gesamtgewicht der Polyolformulierung eingesetzt.

Das erfindungsgemäße Polyurethanreaktivgemisch kann gegebenenfalls auch Hilfs- und Zusatzmittel (B6) enthalten. Unter Hilfs- und Zusatzmitteln werden die aus Stand der Technik allgemein bekannten und üblichen Hilfs- und Zusatzstoffe verstanden. Genannt seien beispielsweise oberflächenaktive Substanzen, Zellregler, Füllstoffe, Farbstoffe, Pigmente, Flammschutzmittel, Antistatika, Hydrolyseschutzmittel und/oder fungistatisch und bakteriostatisch wirkende Substanzen und Mischungen davon.

Bei der Umsetzung werden die Polyisocyanate (A) und die Polyolmischung (B) im Allgemeinen in solchen Mengen zur Umsetzung gebracht, dass die sogenannte lsocyanat-Kennzahl des Schaums 100 bis 160, bevorzugt 100 bis 140 beträgt.

In einer bevorzugten Ausführungsform werden die Komponenten (A) und (B) des Polyurethansystems so gewählt, dass der resultierende Schaumstoff eine Druckfestigkeit (bei einer Rohdichte von 60 kg/m3) von größer 0,2 N/mm2 , bevorzugt größer 0,25 N/mm2, besonders bevorzugt größer 0,3 N/mm2, gemessen nach DIN 53421, aufweist.

Im Allgemeinen beträgt die Gesamteinfüllrohdichte weniger als 120 kg/m3, bevorzugt weniger als 110 kg/m3, besonders bevorzugt weniger als 100 kg/m3, ganz besonders bevorzugt weniger als 90 kg/m3, insbesondere weniger als 85 kg/m3. Unter Gesamteinfüllrohdichte wird im Allgemeinen die Gesamtmenge an eingefülltem flüssigem Polyurethan-Material, bezogen auf das Gesamtvolumen des auszuschäumenden Volumens verstanden.
Das erfindungsgemäße Verfahren kann im Allgemeinen bei jeder dem Fachmann als geeignet erscheinenden Verdichtung erfolgen. Unter Verdichtung versteht man den Quotienten aus der Gesamteinfüllrohdichte des Volumens dividiert durch die freigeschäumte Kernrohdichte bestimmt an einem unverdichteten Schaumkörper.

Bevorzugt wird die Umsetzung bei einer Verdichtung von kleiner 4,5, bevorzugt kleiner 4,0, besonders bevorzugt kleiner 3,5 und ganz besonders bevorzugt kleiner 3,0 durchgeführt.
Bei der Verdichtung handelt es sich um das Verhältnis von freier Rohdichte zu Gesamteinfüllrohdichte. Die freie Rohdichte wird gemäß DIN EN ISO 845 bestimmt und ist die Dichte, die erhalten wird, wenn das Polyurethanreaktivgemisch frei aufschäumt.

Die Polyurethanhartschäume werden zur Herstellung von gedämmten Rohren und Paneelen eingesetzt.
Die vorliegende Erfindung wird anhand der nachfolgenden Beispiele noch eingehender erläutert werden.

### Beispiele:

Die Herstellung der PUR -Hartschaumstoffe erfolgte nach dem bekannten Einstufenverfahren, bei dem die Reaktionskomponenten diskontinuierlich miteinander zur Reaktion gebracht werden. Die Reaktionskomponenten wurden in geeignete Formen zur Aushärtung gebracht. Im Falle der vorliegenden Erfindung wurde die Rezeptur mit einer Polyolkomponente, einem physikalischen Treibmittel, einer Isocyanatkomponente sowie verschiedenen Katalysatoren über die konventionelle Vermischung dieser Komponenten über ein Rührwerk im Labormaßstab verarbeitet.

Eingesetzte Rohstoffe:
- Polyol 1:: Polyetherpolyol mit einer Hydroxylzahl von 450 mg KOH/g, einer theoretischen Funktionalität von 4,7 und einer Viskosität von 15000 mPas bei 25 °C ; Starter: Sucrose, 1,2-Propylenglykol und Ethylenglykol
- Polyol 2:: Polyetherpolyol mit einer Hydroxylzahl von 440 mg KOH/g, einer theoretischen Funktionalität von 2,8 und einer Viskosität von 440 mPas bei 25 °C ; Starter: Ethylenglykol und Sucrose
- Polyol 3:: Polyetherpolyol mit einer Hydroxylzahl von 112 mg KOH/g, einer theoretischen Funktionalität von 2,0 und einer Viskosität von 140 mPas bei 25 °C ; Starter: 1,2-Propylenglykol
- Polyol 4:: Polyetherpolyol mit einer Hydroxylzahl von 358 mg KOH/g, einer theoretischen Funktionalität von 3,0 und einer Viskosität von 600 mPas bei 25 °C ; Starter: Trimethylolpropan
- Schaumstabilisator:: B8421 von EVONIK auf Silikonbasis
- Katalysator 1:: Cyclohexyldimethylamin
- Katalysator 2:: Tris-(3-dimethylamino)-propylamin
- Katalysator 3:: Natrium-N-(2-hydroxy-5-nonylphenyl)methyl-N-methylglycinat in Diethylenglykol (40/60)
- Katalysator 4:: 1-(bis(3-(Dimethylamino)propyl)amino)propan-2-ol
- Katalysator 5:: 1,4-Diazabicyclooctan in Dipropylenglycol
- Cyclopentan:: physikalisches Treibmittel
- Isocyanat:: Polymeres MDI; NCO-Gehalt =31,5 Gew.-%; f = 2,9; Monomer-Gehalt = 40 Gew.-% (Desmodur 44V20 L von Covestro Deutschland AG)

### Beispiel: Herstellung der PUR-Schaumstoffe im Labor

Die Polyolformulierung mit den Komponenten B1, B3, B5 und B6 wurde mit dem Treibmittel B4 und dem Isocyanat A im Labor manuell über ein gängiges Rührwerkzeug in einem Reaktionsgefäß (Pappbecher) vermischt und zur Reaktion gebracht. Die Rohstofftemperaturen lagen jeweils bei 20 °C.

### a) Freischäume

Zur Herstellung von Freischäumen wurde das Reaktionsgemisch in eine Papierform gegossen. Hierin konnte der Schaum frei aufschäumen. Die Form brachte keinerlei Gegendruck auf, so dass der Schaum nur gegen den Luftdruck aufsteigen musste. Die so hergestellten Freischäume wurden hinsichtlich ihrer Rohdichte im Kern und ihrer Reaktivität (Liegezeit und Abbindezeit) analysiert. Die freie Rohdichte wird gemäß DIN EN ISO 845 bestimmt.

### b) Fließeigenschaften des Freischaumes bei Normaldruck

Zur Untersuchung der Fließeigenschaften der Schäume wurde das Reaktionsgefäß nach dem Rührvorgang mit einer für diese Methode normierten Menge des Reaktionsgemisches (390g) in ein beheizbares Steigrohr (HSR, Hartschaumsteigrohr) mit der Höhe von 150 cm und dem Innendurchmesser von 9,1 cm eingebracht. Die Temperatur des Steigrohrs lag bei 35 °C. Die Steighöhe und der Druck wurden in Abhängigkeit der Zeit detektiert und gemäß des jeweils vorherrschenden Luftdrucks auf einen Standarddruck von 1013 mbar korrigiert. Hierbei wird folgende Größe ermittelt: hE (erreichte Endhöhe des Schaums in cm).

### c) Formschäume zur Messung des Nachtriebs

Zur Herstellung der Formschäume wurden jeweils 387g des auf 20°C temperierten Reaktionsgemisches in eine Form (220x220x100mm) mit einem Volumen von 4,84 L (entspricht einer Einfüllrohdichte von 80 kg/m³) eingegossen und die Form anschließend in einer Spindelpresse verschlossen. Die Formtemperatur betrug 40 °C. Die so hergestellten Formschäume wurden anschließend nach unterschiedlichen Formverweilzeiten der Form entnommen, und 30 Minuten nach Entformung wurde der Nachtrieb ermittelt. Die Differenz aus Höhe der Form (100mm) und der nach 30 Minuten ermittelten Höhe des Schaumes in Millimetern ist der Nachtrieb (h_{Schaumhöhe} - h_{Form} = Nachtrieb).

Anschließend wurden die Schaumkörper mittig durchgesägt, um die Rissfreiheit zu bestimmen.

**Tabelle:**

| | | **V1** | **V1*** | **V2** | **V2*** | **V3** | **V3*** | **V4** | **V4*** | **V5** |
|---|---|---|---|---|---|---|---|---|---|---|
| **Polyol 1** | [Gew.-Teile] | **57,2 0** | **57,2 0** | **57,20** | **57,2 0** | **57,20** | **57,20** | **57,2 0** | **57,2 0** | **57,2 0** |
| **Polyol 2** | [Gew.-Teile] | **22,0 5** | **22,0 5** | **22,05** | **22,0 5** | **22,05** | **22,05** | **22,0 5** | **22,0 5** | **22,0 5** |
| **Polyol 3** | [Gew.-Teile] | **3,84 0** | **3,84 0** | **3,840** | **3,84 0** | **3,840** | **3,840** | **3,84 0** | **3,84 0** | **3,84 0** |
| **Polyol 4** | [Gew.-Teile] | **12,4 6** | **12,4 6** | **12,46** | **12,4 6** | **12,46** | **12,46** | **12,4 6** | **12,4 6** | **12,4 6** |
| **Schaumstabilisator** | [Gew.-Teile] | **1,92** | **1,92** | **1,92** | **1,92** | **1,92** | **1,92** | **1,92** | **1,92** | **1,92** |
| **Wasser** | [Gew.-Teile] | **2,25** | **2,25** | **2,25** | **2,25** | **2,25** | **2,25** | **2,25** | **2,25** | **2,25** |
| **Katalysator 1** | [Gew.-Teile] | **0,88** | **0,88** | **0,28** | **0,20** | **0,20** | **0,20** | **0,20** | **0,20** | |
| **Katalysator 2** | [Gew.-Teile] | | | **0,5** | **0,5** | | | | | |
| **Katalysator 3** | [Gew.-Teile] | | **0,25** | | **0,25** | | **0,25** | | **0,25** | **5,2** |
| **Katalysator 4** | [Gew.-Teile] | | | | | | | **0,74** | **0,74** | |
| **Katalysator 5** | [Gew.-Teile] | | | | | **0,75** | **0,70** | | | |
| **Cyclopenta n** | [Gew.-Teile] | **12,0** | **12,0** | **12,0** | **12,0** | **12,0** | **12,0** | **12,0** | **12,0** | **12,0** |
| **polymeres MDI** | [Gew.-Teile] | **170, 0** | **170, 0** | **170,0** | **170, 0** | **170,0** | **170,0** | **170, 0** | **170, 0** | **170, 0** |

| **Freischaum** | | | | | | | | | | |
|---|---|---|---|---|---|---|---|---|---|---|
| **Rohstofftemperatur** | [°C] | **20** | **20** | **20** | **20** | **20** | **20** | **20** | **20** | **20** |
| **Drehzahl** | **[U/min]** | **1000** | **1000** | **1000** | **1000** | **1000** | **1000** | **1000** | **1000** | **1000** |
| **Rührzeit, t_{R}** | **[Sek.]** | **15** | **15** | **15** | **15** | **15** | **15** | **15** | **15** | **15** |
| **Liegezeit, t_{L}** | **[Sek.]** | **37** | **44** | **36** | **35** | **49** | **48** | **48** | **47** | **70** |
| **Abbindezeit, t_{A}** | **[Sek.]** | **218** | **224** | **217** | **212** | **221** | **219** | **220** | **222** | **208** |
| **Freie Rohdichte** | **[kg/m³]** | **28,8** | **29,5** | **28,7** | **29,8** | **30,2** | **30,1** | **29,8** | **29,7** | **29,5** |

| **Nachtrieb [Einfülldichte 80kg/m³; Panel: 4,84 L]** | | | | | | | | | | |
|---|---|---|---|---|---|---|---|---|---|---|
| **Formverweilzeit [Min.]** | | | | | | | | | | |
| **19** | **[mm]** | **3,4** | **2,9** | | | | | | | **1,8** |
| **20** | **[mm]** | | | **4,0** | **3,0** | | | | | |
| **23** | **[mm]** | | | | | | | **4,2** | **1,2** | |
| **27** | **[mm]** | | | | | **5,0** | **4,4** | | | |

| **Rissfreiheit der Panels** | | | | | | | | | | |
|---|---|---|---|---|---|---|---|---|---|---|
| **19** | | **Nein** | **Ja** | | | | | | | **Ja** |
| **20** | | | | **Nein** | **Ja** | | | | | |
| **23** | | | | | | | | **Nein** | **Ja** | |
| **27** | | | | | | **Nein** | **Ja** | | | |

| **Fließeigenschaft** | | | | | | | | | | |
|---|---|---|---|---|---|---|---|---|---|---|
| **Endhöhe** | **[cm]** | **142, 0** | **137,7** | **142,0** | **138, 2** | **124,0** | **125,9** | **135,6** | **136, 6** | **120, 7** |

| | | | | | | | | | | |
|---|---|---|---|---|---|---|---|---|---|---|
| *erfindungsgemäße Versuche | | | | | | | | | | |

Wie der Tabelle zu entnehmen ist, sind die erfindungsgemäßen Polyurethanhartschäume (V1*, V2*, V3* und V4*) hinsichtlich Nachtrieb und Rissfreiheit bei vergleichbarer Reaktivität und Fließeigenschaften besser als die entsprechenden Hartschäume, die ohne das erfindungsgemäß eingesetzte Katalysatorgemisch hergestellt wurden. Bei alleinigem Einsatz des Katalysators 3 (Natrium-N-(2-hydroxy-5-nonylphenyl)methyl-N-methylglycinat in Diethylenglykol (40/60)) ist das Fließverhalten schlecht (Beispiel V5).
Abbindezeit ist die Zeit zwischen Abmischung der Komponenten A und B bis zu dem Zeitpunkt, wenn mit einem Stab aus dem Reaktionsgemisch Fäden gezogen werden können.

Rührzeit ist die Zeit der Homogenisierung des Reaktionsgemisches.

Liegezeit ist die Zeit zwischen Homogenisierung und dem Beginn des Aufschäumens.

## Patentansprüche

1. Polyurethanhartschaumstoffe zur Herstellung von gedämmten Rohren und Paneelen erhältlich aus Polyurethanreaktivgemischen bestehend aus
A) einer organischen aromatischen Polyisocyanatkomponente
und
B) einer Polyolformulierung bestehend aus
B1) einem oder mehreren Polyolen mit einer zahlenmittleren Hydroxylzahl von 50 bis 800 mg KOH/g gemäß DIN 53240-2, Oktober 1998 aus der Gruppe bestehend aus Polyetherpolyolen, Polyesterpolyolen und Polyetheresterpolyolen,
B2) gegebenenfalls Kettenverlängerern und/oder Vernetzern,
B3) einem Katalysatorgemisch bestehend aus Natrium-N-(2-hydroxy-5-nonylphenyl)methyl-N-methylglycinat und mindestens einem weiteren tertiären Aminkatalysator,
B4) Treibmitteln,
B5) Schaumstabilisatoren,
B6) gegebenenfalls Hilfs- und Zusatzmitteln,
wobei das Verhältnis der Anzahl der NCO-Gruppen zu der Anzahl der OH-Gruppen 1:1 bis 1,6:1 beträgt.

2. Polyurethanhartschaumstoffe gemäß Anspruch 1 erhältlich aus Polyurethanreaktivgemischen bestehend aus
A) einer organischen aromatischen Isocyanatkomponente
und
B) einer Polyolformulierung bestehend aus
B1) einem oder mehreren Polyolen mit einer zahlenmittleren Hydroxylzahl von 100 bis 600 gemäß DIN 53240-2, Oktober 1998 aus der Gruppe bestehend aus Polyetherpolyolen, Polyesterpolyolen und Polyetherester¬polyolen,
B2) gegebenenfalls Kettenverlängerern und/oder Vernetzern,
B3) einem Katalysatorgemisch bestehend aus Natrium-N-(2-hydroxy-5-nonylphenyl)methyl-N-methylglycinat und mindestens einem weiteren tertiären Aminkatalysator,
B4) Treibmitteln,
B5) Schaumstabilisatoren,
B6) gegebenenfalls Hilfs- und Zusatzmitteln,
wobei das Verhältnis der Anzahl der NCO-Gruppen zu der Anzahl der OH-Gruppen 1:1 bis 1,4:1 beträgt.

3. Verwendung der Polyurethanhartschaumstoffe gemäß Anspruch 1 oder 2 zur Herstellung von gedämmten Rohren und Paneelen.
